# EUROPÄISCHE PATENTSCHRIFT

(11) **EP 0 592 901 B1**
(45) Veröffentlichungstag und Bekanntmachung des Hinweises auf die Patenterteilung: **19.07.1995**
(21) Anmeldenummer: 93115928.9
(22) Anmeldetag: 01.10.1993
(51) Int. Cl.: B60K 7/00, B61C 9/46, B61C 9/48

(54) **Antrieb**
Drive unit
Dispositif d'entraînement

(30) Priorität: 15.10.1992 DE 4234831
(43) Veröffentlichungstag der Anmeldung: 20.04.1994
(73) Patentinhaber: SIEMENS AKTIENGESELLSCHAFT, 80333 München (DE)
(72) Erfinder: Pfannschmidt, Bernd, Dipl.-Ing. (FH), D-90574 Rosstal (DE)

(56) Entgegenhaltungen:
- EP-A- 0 413 337
- DE-A- 3 204 566
- DE-A- 3 538 513

## Beschreibung

Die Erfindung bezieht sich auf einen Antrieb gemäß Oberbegriff des Anspruchs 1.

Ein derartiger Antrieb für ein Fahrzeugrad ist durch die EP 0 052 344 A2 bekannt. Bei diesem Antrieb ist die bereits vorhandene Radfelge eines Kraftfahrzeugs als Außenläufer ausgebildet. Das Ständerblechpaket ist verdrehfest am Fahrwerk befestigt.

In der älteren, am Prioritätstag der vorliegenden Erfindung veröffentlichten DE 41 11 627 A1 ist ein Außenläufermotor für ein Elektromobil beschrieben. Der Außenläufer ist in die Radfelge des Fahrzeugrades eingebaut und kann damit nicht als Radträger dienen. Der axiale Einbauraum des Außenläufers wird durch die Felgenhörner begrenzt, die über Lager direkt auf dem Felgenkörper gelagert sind. Die Felgenhörner dienen damit als Radträger und bilden die Motorschilde. Das Ständerblechpaket des Außenläufermotors ist über Lager im Außenläufer gelagert.

Durch die EP 0 413 337 A1 ist weiterhin ein elektromotorischer Direktantrieb für Schienenfahrzeuge bekannt, bei dem axial neben einem anzutreibenden Fahrzeugrad ein elektronisch kommutierter, gehäuseloser Elektromotor angeordnet ist. Der Elektromotor ist mit seinem Außenläufer ohne Zwischenschaltung eines Getriebes an der Achswelle des anzutreibenden Fahrzeugrades befestigt. Der bekannte Direktantrieb ist axial relativ breit, so daß die angetriebenen Fahrzeugräder einen entsprechend breiten Radkasten benötigen. Dadurch ist insbesondere bei Niederflur-Schienenfahrzeugen der Fahrgastraum im Bereich dieser Radkästen verengt.

In der DE 35 38 513 C2 ist ferner ein elektromotorischer Radnabenantrieb für Schienenfahrzeuge beschrieben, bei dem der in einer Radführungsschwinge gelagerte Radträger vom Ständergehäuseteil des Elektromotors gebildet wird. Die Rotorwelle des Elektromotors ist koaxial zum Einzelrad drehbar gelagert und axial außen über ein Planetengetriebe in Mitnahmeverbindung mit dem Einzelrad gestellt. Aufgrund seiner Kompaktheit benötigt der bekannte Radnabenantrieb nur kleine Radkästen, so daß bei Niederflur-Schienenfahrzeugen ein durchgehend niedriger Wagenboden realisiert werden kann. Der Radnabenantrieb gemäß der DE 35 38 513 C2 erfordert wegen seines Getriebes jedoch Abdichtungsmaßnahmen sowie regelmäßigen Ölwechsel.

Darüber hinaus ist durch die EP 0 249 808 A1 ein Elektroantrieb für Kraftfahrzeuge bekannt, bei dem der Außenläufer am Ständer gelagert ist. Der Außenläufer ist über ein Getriebe mit dem anzutreibenden Fahrzeugrad verbunden.

Ein weiterer Antrieb für Fahrzeuge ist in der DE 25 35 418 A1 offenbart. Bei diesem Antrieb handelt es sich um einen Außenläufermotor, der in einer gemeinsamen röhrenförmigen Tragachse eines Radpaares angeordnet ist. Der Stator sitzt auf einer Stange, die innerhalb der röhrenförmigen Tragachse verläuft. Auf dem Stator ist der Außenläufer gelagert. Gemäß einer bevorzugten Ausführungsform kann der Antriebsmotor über ein Getriebe mit der Tragachse verbunden sein.

Aufgabe der vorliegenden Erfindung ist es, einen kompakten und wartungsfreundlichen Antriebsmotor für ein Fahrzeugrad zu schaffen, der bei gleicher Größe konstruktiv einfacher ist.

Die Aufgabe wird erfindungsgemäß durch die Merkmale im kennzeichnenden Teil des Anspruchs 1 gelöst. Vorteilhafte Ausgestaltungen der Erfindung sind jeweils Gegenstand der weiteren Ansprüche.

Der erfindungsgemäße Antrieb ist als Radnaben-Direktantrieb ausgebildet. Der Antriebsmotor ist also über seinen Läufer ohne Zwischenschaltung eines Getriebes mit dem anzutreibenden, in einem Fahrwerk drehbar gelagerten Fahrzeugrad verbunden. Bei dem Antriebsmotor gemäß Anspruch 1 handelt es sich um einen Außenläufermotor, dessen Ständerblechpaket verdrehsicher am Fahrwerk befestigt ist und dessen Außenläufer den Radträger für das anzutreibende Fahrzeugrad bildet. Der Außenläufer ist im Fahrwerk drehbar gelagert. Das Ständerblechpaket, ist seinerseits verdrehfest im Außenläufer gelagert.

Der Begriff Fahrwerk in der vorliegenden Erfindung umfaßt hierbei nicht nur Fahrwerksholme und Fahrwerksschwingen bzw. Drehgestellschwingen, sondern auch Aufnahmepunkte in der Fahrzeugkarosserie, z.B. im Wagenkasten oder im Radkasten.

Ein Radnabenantrieb mit dem erfindungsgemäßen Antriebsmotor ist konstruktiv wesentlich einfacher aufgebaut und darüber hinaus sehr viel wartungsfreundlicher, da kein Getriebe erforderlich ist. Trotz des fehlenden Getriebes ist für den Radnabenantrieb gemäß der Erfindung kein größerer Bauraum erforderlich.

Eine Ausgestaltung gemäß Anspruch 2 erlaubt es, auch bei Schienenfahrzeugen mit relativ geringer Spurweite, z.B. 1 m, ein Niederflur-Fahrzeug mit einer relativ großen Durchgangsbreite im Bereich der Radkästen zu schaffen.

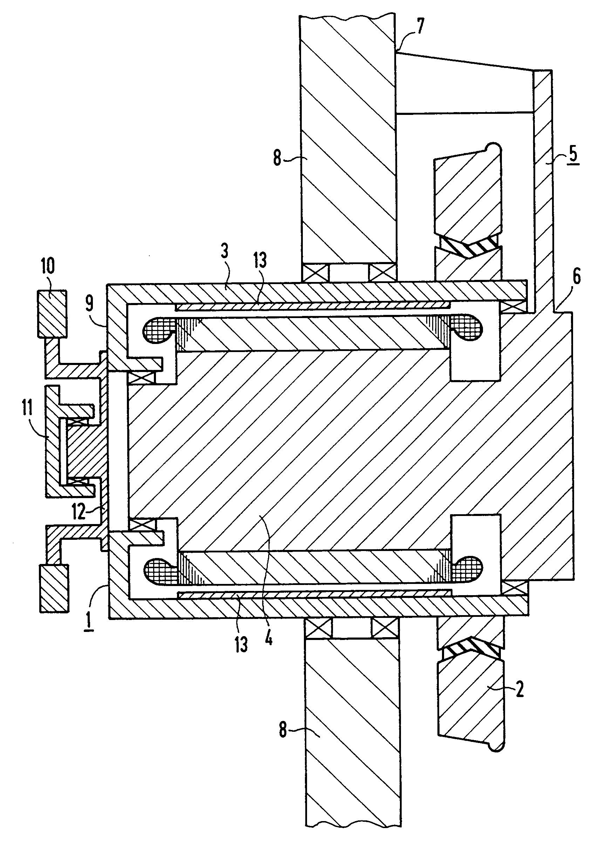

Weitere Vorteile und Einzelheiten der Erfindung ergeben sich aus der nachfolgenden Beschreibung eines Ausführungsbeispieles anhand der Zeichnung und in Verbindung mit den Unteransprüchen.

In der Zeichnung ist mit 1 ein Antriebsmotor für ein Fahrzeugrad 2 bezeichnet. Der Antriebsmotor 1 ist als Außenläufermotor ausgebildet, dessen Außenläufer 3 als Radträger für das angetriebene Fahrzeugrad 2 dient.

Der Außenläufermotor 1 umfaßt ferner ein Ständerblechpaket 4, das im Außenläufer 3 verdrehfest gelagert ist. Zur verdrehfesten Halterung des Ständerblechpakets 4 ist eine Drehmomentabstützung 5 vorgesehen, die mit ihrer einen Seite 6 mit dem Ständerblechpaket 4 und mit ihrer anderen Seite 7 an einer Drehgestellschwinge 8 befestigt ist. In der Drehgestellschwinge 8 ist weiterhin die Lagerung für den Außenläufer 3 angeordnet.

Die Drehgestellschwinge 8 ist im vorliegenden Ausführungsbeispiel derart angeordnet, daß das Fahrzeugrad 2 bezogen auf die Lagerung des Antriebsmotors 1 in der Drehgestellschwinge 8, axial innen angeordnet ist. Durch die axial außenliegende Drehgestellschwinge 8 kann auch bei Schienenfahrzeugen mit einer relativ geringen Spurweite eine relativ große Durchgangsbreite im Bereich der Radkästen erzielt werden.

Im dargestellten Ausführungsbeispiel ist der Außenläufer 3 radial außen in der Drehgestellschwinge 8 gelagert. Die Lagerung des Außenläufers 3 ist dann zugleich auch die Lagerung des anzutreibenden Fahrzeugrades 2.

An der axial außenliegenden Stirnseite 9 des Außenläufermotors 1 ist eine Bremsscheibe 10 sowie ein Erdungskontakt 11 angeordnet. Ferner ist an der axial außenliegenden Stirnseite 9 des Außenläufermotors 1 ein Lagerdeckel 12 angeordnet, der das Ständerblechpaket 4 und die Lagerung gegen Verschmutzung schützt.

Die Bremsscheibe 10 läuft in vorteilhafter Weise immer mit der Raddrehzahl, da der erfindungsgemäße Antriebsmotor 1 kein Getriebe aufweist. Gegenüber einer Bremsscheibe, die aufgrund der Getriebeübersetzung mit einer gegenüber der Raddrehzahl höheren Drehzahl läuft, treten wesentlich geringere Unwuchten auf.

Die in der Zeichnung dargestellte Ausführungsform ermöglicht eine besonders einfache Wartung, da nach dem Anheben des Wagenkastens das Ständerblechpaket 4 nach innen hin aus dem Außenläufer 3 herausgenommen werden kann. Eine Demontage des Fahrzeugrades 2 ist ebenfalls sehr einfach, da hierfür nach dem Anheben des Wagenkastens lediglich die Drehmomentabstützung 5 entfernt werden muß.

Bei dem in der Zeichnung dargestellten Außenläufermotor 1 weist der Außenläufer 3 Permanentmagnete 13 auf; der Antriebsmotor 1 ist also als permanentmagneterregter Synchronmotor ausgeführt. Der Außenläufermotor 1 kann jedoch auch als Asynchronmotor ausgebildet sein; der Außenläufer 3 weist dann ein Rotorblechpaket auf.

Es versteht sich in diesem Zusammenhang von selbst, daß die Erfindung nicht auf Schienenfahrzeuge beschränkt ist; vielmehr ist der erfindungsgemäße Antriebsmotor z.B. auch bei Straßenfahrzeugen einsetzbar.

## Patentansprüche

1. Antrieb mit einem Außenläufermotor (1) in einem Fahrzeugrad (2), wobei der als Radträger ausgebildete Außenläufer (3) im Fahrwerk drehbar gelagert und dessen Ständerblechpaket (4) am Fahrwerk drehsicher befestigt ist,
**dadurch gekennzeichnet**,
daß der Außenläufer (3) radial außen in einer ihn umgreifenden Fahrwerksschwinge gelagert ist, wobei das Ständerblechpaket (4) im Außenläufer (3) gelagert und über eine Drehmomentabstützung mit der Fahrwerksschwinge verbunden ist.

2. Antrieb nach Anspruch 1,
**dadurch gekennzeichnet**,
daß das Fahrzeugrad (2) bezogen auf die Lagerung des Antriebsmotors (1) in der Fahrwerksschwinge bzw. im Fahrwerksholm axial innen, näher zur Fahrzeuglängsachse angeordnet ist.

3. Antrieb nach Anspruch 1 oder 2,
**dadurch gekennzeichnet**,
daß an der der Fahrzeuglängsachse abgewandten Stirnseite (9) des Außenläufermotors (1) eine Bremsscheibe (10) angeordnet ist.

4. Antrieb nach einem der Ansprüche 1 bis 3,
**dadurch gekennzeichnet**,
daß an der der Fahrzeuglängsachse abgewandten Stirnseite (9) des Außenläufermotors (1) ein Erdungskontakt (11) angeordnet ist.

5. Antrieb nach Anspruch 2,
**dadurch gekennzeichnet**,
daß die Drehmomentabstützung (5) eine Zug-Druck-Stange umfaßt.

6. Antrieb nach einem der Ansprüche 1 bis 5,
**dadurch gekennzeichnet**,
daß die Fahrwerksschwinge als Drehgestellschwinge (8), oder Fahrwerksholm ausgebildet ist.

7. Antrieb nach einem der Ansprüche 1 bis 6,
**dadurch gekennzeichnet**,
daß an den Außenläufermotor (1) axial außen ein Lagerdeckel (12) angeordnet ist, der das Ständerblechpaket (4) an seiner der Fahrzeuglängsachse abgewandten Stirnseite zumindest teilweise abdeckt.

## Claims

1. Drive with an external-rotor motor (1) in a vehicle wheel (2), whereby the external rotor (3) constructed as wheel support is rotatably mounted in the running gear and its laminated stator core (4) is fastened in a rotationally secure manner to the running gear, characterized in that the external rotor (3) is mounted radially on the outside in a running gear link engaging around it, whereby the laminated stator core (4) is mounted in the external rotor (3) and is connected by way of a torque support to the running gear link.

2. Drive according to claim 1, characterized in that the vehicle wheel (2) in relation to the bearing of the drive motor (1) is arranged in the running gear link or in the running gear side-piece axially on the inside, closer to the longitudinal axis of the vehicle.

3. Drive according to claim 1 or 2, characterized in that a brake disc (10) is arranged at the end face (9) of the external-rotor motor (1) directed away from the longitudinal axis of the vehicle.

4. Drive according to one of claims 1 to 3, characterized in that an earth terminal (11) is arranged at the end face (9) of the external-rotor motor (1) directed away from the longitudinal axis of the vehicle.

5. Drive according to claim 2, characterized in that the torque support (5) comprises a push-pull rod.

6. Drive according to one of claims 1 to 5, characterized in that the running gear link is constructed as a truck link (8) or a running gear side-piece.

7. Drive according to one of claims 1 to 6, characterized in that a bearing cover (12) is arranged axially on the outside on the external-rotor motor (1), the bearing cover covering the laminated stator core (4) at least partially at its end face directed away from the longitudinal axis of the vehicle.

## Revendications

1. Dispositif d'entraînement comportant un moteur à rotor extérieur (1) placé dans une roue de véhicule (2), le rotor extérieur (3) agencé sous la forme d'un support de roue étant monté de manière à pouvoir tourner dans le châssis, tandis que le paquet de tôles statoriques (4) de ce moteur est fixé avec blocage en rotation au châssis, caractérisé par le fait que le rotor extérieur (3) est monté, extérieurement du point de vue radial, dans un bras oscillant du châssis, qui s'engage autour du rotor, le paquet de tôles statoriques (4) étant tourillonné dans le rotor extérieur (3) et étant relié au bras oscillant du châssis par l'intermédiaire d'un système de réception du couple.

2. Dispositif d'entraînement suivant la revendication 1, caractérisé par le fait que la roue de véhicule (2) est disposée axialement sur le côté intérieur par rapport au support du moteur d'entraînement (1) dans le bras oscillant du châssis ou dans le longeron du châssis, dans une position plus proche de l'axe longitudinal du véhicule.

3. Dispositif d'entraînement suivant la revendication 1 ou 2, caractérisé par le fait qu'un disque de frein (100) est disposé sur la face frontale (9), tournée à l'opposé de l'axe longitudinal du véhicule, du moteur (1) à rotor extérieur.

4. Dispositif d'entraînement suivant l'une des revendications 1 à 3, caractérisé par le fait qu'un contact de masse (11) est disposé sur la face frontale (9), tournée à l'opposé de l'axe longitudinal du véhicule, du moteur (1) à rotor extérieur.

5. Dispositif d'entraînement suivant la revendication 2, caractérisé par le fait que le dispositif (5) de réception du couple comprend une barre travaillant en traction et en compression.

6. Dispositif d'entraînement suivant l'une des revendications 1 à 5, caractérisé par le fait que le bras oscillant du châssis est agencé sous la forme d'un bras oscillant de bogie (8) ou sous la forme d'un longeron du châssis.

7. Dispositif d'entraînement suivant l'une des revendications 1 à 6, caractérisé par le fait que sur le moteur (1) à rotor extérieur est disposé, et ce extérieurement du point de vue radial, un couvercle de palier (12), qui recouvre au moins partiellement le paquet de tôles statoriques (4) sur sa face frontale tournée à l'opposé de l'axe longitudinal du véhicule.
